# EUROPEAN PATENT SPECIFICATION

(11) **EP 0 659 690 B1**
(45) Date of publication and mention of the grant of the patent: **01.07.1998**
(21) Application number: 94300820.1
(22) Date of filing: 04.02.1994
(51) Int. Cl.: C02F 1/24

(54) **Water purification plant**
Wasserreinigungsanlage
Installation pour la purification d'eau

(30) Priority: 20.12.1993 FI 935722
(43) Date of publication of application: 28.06.1995
(73) Proprietor: Suutarinen, Oiva, SF-02260 Espoo (FI)
(72) Inventor: Suutarinen, Oiva, SF-02260 Espoo (FI)
(74) Representative: Prentice, Raymond Roy

(56) References cited:
- FR-A- 2 138 997
- GB-A- 977 488
- GB-A- 2 230 710
- LU-A- 53 878
- US-A- 4 957 633

## Description

The invention relates to a water purification plant for purifying the fluid to be purified by means of flotation clarification, in which plant the pollutional particles or the impurities dissolved in the fluid and brought into a particle form by means of flocculation chemicals are separated from the fluid to the purified and led onto the surface of the fluid into a slurry bed, which slurry bed is led away into a sewer system or the like and the purified fluid is led via a clarification basin and an intermediate bottom or the like located on its lower part into a lower space of the clarification basin or directly away for additional purification or consumption, or when waste water is concerned, back to the environment.

The flotation method has proved to be the best and most efficient water purification method for chemically purifying lake, river and water as well as iron-bearing and polluted groundwaters. Similarly, it is the most efficient chemical purification method for waste waters, especially when very difficult industrial waste waters and preliminary and final purification of waste waters are concerned.

When the purification of water or waste water is concerned, attention has always to be paid to the fact that the constructions and basins are large and expensive, and especially in a cold climate, attention has also to be paid to the fact that they have to be protected by means of normal heatable house structures.

In the Finnish patent application 841591 is described a method for purifying a fluid to be purified by means of flotation clarification. In this known method, the pollutional particles or the impurities dissolved in the fluid and brought into a particle form by means of flocculation chemicals are separated from the fluid to be purified and led onto the surface of the fluid as a slurry bed, which slurry bed is led away into a sewer system or the like and the purified fluid is led via a bottom portion of the clarification basin through the bottom in the clarification basin for consumption, or when waste water is concerned, back to the environment. In this known method, the purified fluid is caused to flow down in the clarification basin after a runoff channel within the area of the entire clarification basin, including the basin region adjacent to the runoff channel, by means of an edge circulating the clarification basin, whereby the purified fluid flows from below the edge and whereby the flow of the purified fluid forms extremely uniform within the area of the entire clarification basin, and the pollutional particles rise up immediately and accumulate on the surface of the clarification basin in the entire clarification basin.

The object of the invention is to provide a water purification plant, by means of which the plant may be made as small as possible by utilizing the entire basin by flotation clarification without any type of slanting or straight flows, which can never have been totally avoided in the previous plant solutions.

The inventive water purification plant is characterized in that an intermediate bottom of a clarification basin is provided with elements affecting the flow, which elements form the flow resistance of the intermediate bottom such that the flow resistance occurring through the intermediate bottom is at its largest at the final end of the clarification basin and the flow resistance decreases towards the initial end of the clarification basin, whereby the entire area of the clarification basin has the same and uniform flow volume.

In accordance with a certain preferred embodiment of the invention, the clarification basin is furnished with a perforated or gap-provided intermediate bottom, under which is located a pure-water space for discharging the clarified water. The dimensions of the holes or gaps of the intermediate bottom are smaller at the final end of the flotation basin than at its initial end, or the distances of the holes decrease towards the initial end of the basin. In this case, the flow resistance occurring through the intermediate bottom is largest at the final end of the intermediate bottom and thereby also of the entire flotation basin than at the initial end, decreasing towards the initial end, whereby the entire area of the intermediate bottom and the basin have the same and uniform flow volume.

In the inventive plant, a surface-load value of 30-35 m³/m²/h is reached, whereas it amounts to 10 m³/m²/h according to the current practice. Said values obtainable according to the invention are values suitable for Finnish raw waters, which is to be taken into account when comparing the results e.g. with Central and Southern European raw waters, which may be more easily purified and the surface-load values may thereby still be increased from said values.

When the flow in the flotation clarification basin is uniform, the formation of a uniform and tight surface slurry bed is thus reached, the removal of which thereby improves and thus also the amount of waste water decreases, not to mention anything about building and plant savings per fluid cubic meter to be purified, whereas the purification results still resemble the results of flotation plants operating in the best manner.

The invention is next described in detail with reference to a certain preferred embodiment of the invention shown in the figures of the drawing, to which embodiment the invention is, however, not solely limited.

Fig. 1 shows, seen from the top, a certain preferred embodiment of a flotation clarification solution used in an inventive water purification plant.

Fig. 2 shows a section along the line II-II of Fig. 1.

Fig. 3 shows, seen from the top, a certain second preferred embodiment of an inventive water purification plant.

Fig. 4 shows, seen from the top, a certain third preferred embodiment of an inventive water purification plant.

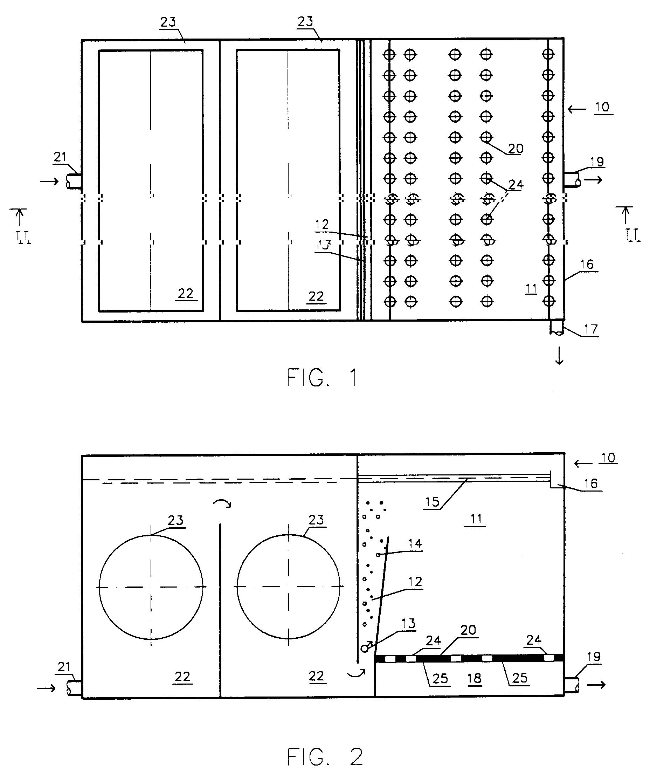

In the embodiment of Fig. 1 and 2, a flotation clarification plant is generally referred to by a numeral 10. The plant 10 comprises a clarification basin 11 and therein an intermediate bottom 20. The clarification occurs in the clarification basin 11. The plant 10 additionally comprises a feed water pipe 21, via which the fluid to be purified flows into a mixing space 22, which e.g. includes rotating mixing devices 23. By means of these devices, by the action of chemicals added to the entering raw water or some other fluid to be purified, the impurities form into flocs and the flocculated water thus formed flows from the mixing space 22 into a runoff channel 12. If e.g. a water containing fibers is concerned, which fibers have to be separated therefrom, no mixing space is needed. To the fluid to be purified in the runoff channel 12 is added a water-air mixture via a pipe 13 and e.g. via nozzles located therein. In the water-air mixture, air occurs as microscopically small bubbles, and it is distributed along the entire width of the basin 11. In this case, the air bubbles adhere, in the runoff channel 12 dimensioned correctly from the point of view of the flow, to pollutional particles 14 and convey them onto the surface of the fluid to be purified, on which surface they spread along the entire region of the basin. As the waste particles accumulate on the surface of the basin 11, they form a slurry bed 15, which is removed at suitable intervals into a sewer trough 16 and therefrom further into a sewer pipe 17.

The clarified fluid flows in the clarification basin 11 downwards and further through the intermediate bottom 20 into a pure-water intermediate space 18 located thereunder and therefrom further via a discharge pipe 19 out of the clarification plant.

The intermediate bottom 20 or a structure corresponding to it may comprise e.g. plates 25 provided with holes 24 or gaps, pipes provided with holes 24, porous plates or pipes or some other corresponding devices. The most important fact is that the hole spacing and the dimensions of the holes 24 or corresponding solution applications are dimensioned such that the flow in the clarification basin 11 have been made such that it occurs in the bottom portion of the basin 11 completely uniform within the entire area of the basin 11.

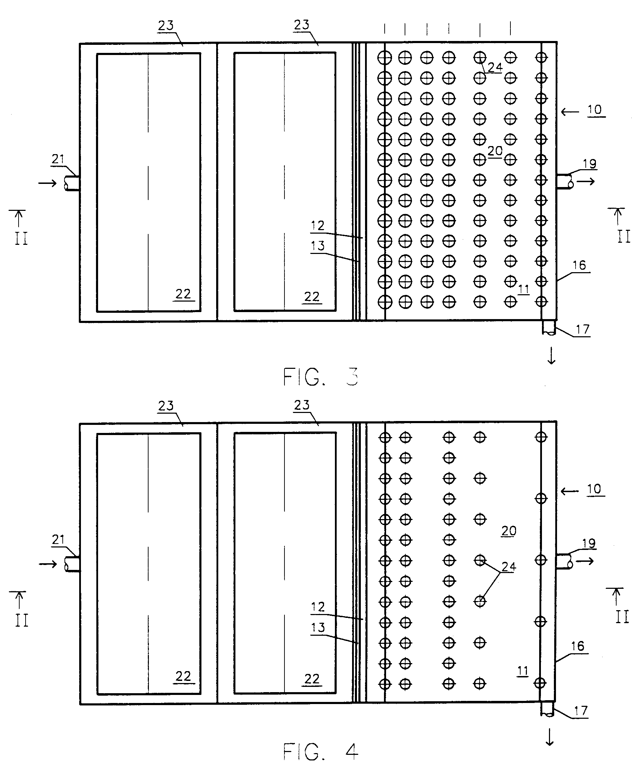

In the embodiment of Fig. 3, the size of the holes 24 increases towards the initial end of the clarification basin 11. Furthermore, the distances of the hole spacing decrease towards the initial end of the clarification basin 11.

In the embodiment of Fig. 4, the distances of the hole spacing decrease towards the initial end of clarification basin 11, and furthermore, the number of the holes 24 may decrease towards the final end of the clarification basin 11.

The invention is naturally in no way limited to the solutions shown in the figures of the drawings, but the inventive method may be applied to basins of a different shape and form and also to rebuilds of existing plants and to increases in capacity.

## Claims

1. A water purification plant for purifying the fluid to be purified by means of flotation clarification, in which plant the pollutional particles or impurities (14) dissolved in the fluid and brought into a particle form by means of flocculation chemicals are separated from the fluid to be purified and led onto the surface of the fluid into a slurry bed (15), which slurry bed (15) is led away into a sewer system (16, 17) and the purified fluid is led via a clarification basin (11) and an intermediate bottom located on its lower portion into a lower space (18) of the clarification basin (11) or directly away for additional purification or consumption, or when waste water is concerned, back to the environment, **characterized** in that an intermediate bottom (20) of the clarification basin (11) is provided with elements (24, 25) affecting the flow, which elements form the flow resistance of the intermediate bottom (20) such that the flow resistance occurring through the intermediate bottom (20) is at its largest at the final end of the clarification basin (11) and the flow resistance decreases towards the initial end of the clarification basin (11), whereby the entire area of the clarification basin (11) has the same and uniform flow volume.

2. A water purification plant of Claim 1, **characterized** in that the intermediate bottom (20) is furnished with plates (25) provided with holes (24).

3. A water purification plant of Claim 1, **characterized** in that the intermediate bottom (20) is furnished with pipes provided with holes (24).

4. A water purification plant of Claim 1, **characterized** in that the intermediate bottom (20) is furnished with porous plates (25).

5. A water purification plant of Claim 1, **characterized** in that the intermediate bottom (20) is furnished with porous pipes.

6. A water purification plant of Claim 2 or 3, **characterized** in that the dimensions of the holes (24) or gaps are smaller at the final end of the clarification basin (11) than at its initial end.

7. A water purification plant of Claim 2 or 3, **characterized** in that the distances of the hole spacing decrease towards the initial end of the clarification basin (11).

## Patentansprüche

1. Wasserreinigungsanlage zum Reinigen des zu reinigenden Fluides mittels einer Aufschwimmklärung, wobei in diese Anlage die im Fluid gelösten und mittels Flockungschemikalien in Teilchenform gebrachten Verschmutzungsteilchen oder Verunreinigungen (14) von dem zu reinigenden Fluid getrennt werden und an die Oberfläche des Fluides zu einem Schlammbett (15) geführt werden, wobei dieses Schlammbett (15) zu einem Sammlersystem (16, 17) weggeleitet wird und das gereinigte Fluid über ein Klärbecken (11) und einen Zwischenboden, der sich an seinem unteren Abschnitt befindet, in einen unteren Raum (18) des Klärbeckens (11) geleitet oder für eine zusätzliche Reinigung oder zum Verbrauch direkt weggeleitet oder, wenn es sich um Abwasser handelt, zurück zu der Umgebung geleitet wird,
**dadurch gekennzeichnet, daß**
ein Zwischenboden (20) des Klärbeckens (11) mit Elementen (24, 25) versehen ist, die die Strömung beeinflussen, wobei die Elemente den Strömungswiderstand des Zwischenbodens (20) derart ausbilden, daß der Strömungswiderstand, der durch den Zwischenboden (20) hindurch auftritt, an dem hinteren Ende des Klärbeckens (11) am größten ist und der Strömungswiderstand zu dem Anfangsende des Klärbeckens (11) hin abnimmt, wodurch der gesamte Bereich des Klärbeckens (11) den gleichen und gleichmäßigen Volumenstrom hat.

2. Wasserreinigungsanlage nach Anspruch 1,
**dadurch gekennzeichnet, daß**
der Zwischenboden (20) mit Platten (25) ausgestattet ist, die mit Löchern (24) versehen sind.

3. Wasserreinigungsanlage nach Anspruch 1,
**dadurch gekennzeichnet, daß**
der Zwischenboden (20) mit Rohren ausgestattet ist, die mit Löchern (24) versehen sind.

4. Wasserreinigungsanlage nach Anspruch 1,
**dadurch gekennzeichnet, daß**
der Zwischenboden (20) mit porösen Platten (25) ausgestattet ist.

5. Wasserreinigungsanlage nach Anspruch 1,
**dadurch gekennzeichnet, daß**
der Zwischenboden (20) mit porösen Rohren ausgestattet ist.

6. Wasserreinigungsanlage nach Anspruch 2 oder 3,
**dadurch gekennzeichnet, daß**
die Abmessungen der Löcher (24) oder Spalte an dem hinteren Ende des Klärbeckens (11) kleiner als an seinem Anfangsende sind.

7. Wasserreinigungsanlage nach Anspruch 2 oder 3,
**dadurch gekennzeichnet, daß**
die Abstände der Lochzwischenräume zu dem Anfangsende des Klärbeckens (11) hin abnehmen.

## Revendications

1. Installation de purification des eaux destinée à épurer le fluide à purifier au moyen de la clarification par flottaison, installation dans laquelle les particules polluantes ou impuretés (14) dissoutes dans le fluide et amenées sous forme particulaire au moyen de produits chimiques de floculation sont séparées du fluide à épurer et sont amenées à la surface du fluide dans un lit de boue liquide (15), lequel lit de boue liquide (15) est entraîné dans un système d'égout (16, 17) et le fluide épuré est amené par l'intermédiaire d'un bassin de clarification (11) et d'un fond intermédiaire situé sur sa portion inférieure dans un espace inférieur (18) du bassin de clarification (11) ou emmené directement aux fins de purification supplémentaire ou de consommation, ou lorsqu'il s'agit d'eaux usées, en retour à l'environnement, caractérisée en ce qu'un fond intermédiaire (20) du bassin d'épuration (11) est muni d'éléments (24, 25) affectant l'écoulement, lesquels éléments créent une résistance à l'écoulement du fond intermédiaire (20) de telle sorte que la résistance à l'écoulement se produisant à travers le fond intermédiaire (20) se trouve à son maximum sur l'extrémité finale du bassin d'épuration (11) et la résistance à l'écoulement diminue en direction de l'extrémité initiale du bassin d'épuration (11) de sorte que toute la surface du bassin d'épuration (11) présente un volume d'écoulement identique et uniforme.

2. Installation de purification des eaux selon la revendication 1, caractérisée en ce que le fond intermédiaire (20) est muni de plaques (25) dotées de trous (24).

3. Installation de purification des eaux selon la revendication 1, caractérisée en ce que le fond intermédiaire (20) est muni de tuyaux dotés de trous (24).

4. Installation de purification des eaux selon la revendication 1, caractérisée en ce que le fond intermédiaire (20) est muni de plaques poreuses (25).

5. Installation de purification des eaux selon la revendication 1, caractérisée en ce que le fond intermédiaire (20) est muni de conduites poreuses.

6. Installation de purification des eaux selon la revendication 2 ou 3, caractérisée en ce que les dimensions des trous (24) ou espaces libres sont plus petites au niveau de l'extrémité finale du bassin d'épuration (11) que sur son extrémité initiale.

7. Installation de purification des eaux selon la revendication 2 ou 3, caractérisée en ce que les distances d'espacement de trous diminuent en direction de l'extrémité initiale du bassin d'épuration (11).
